**Europäisches Patentamt**

**European Patent Office**

**Office européen des brevets**

(19)

(11) **EP 1 354 761 A2**

(12) **EUROPÄISCHE PATENTANMELDUNG**

(43) Veröffentlichungstag:
**22.10.2003 Patentblatt 2003/43**

(51) Int Cl.$^7$: **B60Q 1/12**

(21) Anmeldenummer: **03100974.9**

(22) Anmeldetag: **10.04.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **20.04.2002 DE 10217738**

(71) Anmelder: **Hella KG Hueck & Co.**
**59552 Lippstadt (DE)**

(72) Erfinder:
- **Schmidt, Christian**
  **59955, Winterberg (DE)**
- **Kalze, Franz-Josef**
  **33428, Harsewinkel (DE)**

(54) **Vorrichtung zur Steuerung von wenigstens einem Kurvenscheinwerfer in einem Kraftfahrzeug**

(57) Beschrieben wird eine Vorrichtung zur Steuerung von wenigstens einem Kurvenlichtscheinwerfer in einem Kraftfahrzeug, wobei die Vorrichtung einen Gierratensensor und einen Querbeschleunigungssensor aufweist und aus den Ausgangssignalen dieser Sensoren den vom Fahrzeug durchfahrenen Kurvenradius berechnet. Die erfindungsgemäße Vorrichtung arbeitet bezüglich der übrigen Fahrzeugsensorik autonom und kann vorteilhaft in den (oder die) Fahrzeugscheinwerfer integriert werden.

$$r = a_r / (2\pi \, f)^2$$

Drehrate f

Querbeschleunigung $a_r$

Kurvenradius r

EP 1 354 761 A2

**Beschreibung**

Die Erfindung betrifft eine Vorrichtung zur Steuerung von wenigstens einem Kurvenlichtscheinwerfer in einem Kraftfahrzeug.

Zur Realisierung eines dynamischen Kurvenlichtes ist es erforderlich den vom Fahrzeug aktuell durchfahrenen Kurvenradius ermitteln zu können, um diesen dann in die entsprechende Verstellung der Scheinwerfer umzusetzen.

Bei bekannten Systemen werden ausschließlich fahrzeugeigene Sensoren verwendet. Um aus diesen Sensorwerten den Kurvenradius berechnen zu können ist es notwendig für jeden Fahrzeugtyp die Umrechnungsparameter anzupassen, da sich die geometrischen Verhältnisse und die verwendeten Sensoren unterscheiden. Weitergehende Konzepte wurden vorgestellt, welche es ermöglichen auf die fahrzeugspezifische Anpassung bezüglich der Fahrzeuggeometrie zu verzichten. Hierbei wird jedoch weiterhin auf in das Fahrzeug integrierte Sensoren, insbesondere auf Geschwindigkeitssensoren zugegriffen.

So ist aus der DE 38 08 000 A1 eine Scheinwerfer-Bewegungsvorrichtung bekannt, bei der die einzustellende Scheinwerferposition auf der Basis der Daten eines Gierfühlers und eines Fahrzeuggeschwindigkeitsfühlers berechnet wird. In der DE 43 39 555 A1 wird eine Lampensystem für Kurvenfahrten vorgeschlagen, bei dem der Kurvenradius aus einer Messung der Winkelgeschwindigkeit und der Fahrzeuggeschwindigkeit bestimmt wird. Die DE 198 03 002 A1 zeigt eine Scheinwerfervorrichtung, bei der sich ein Scheinwerferversatz aus den Lenkwinkeldaten und Fahrzeuggeschwindigkeit ergibt.

Da diese bekannten Vorrichtungen alle auf die Daten von Fahrzeuggeschwindigkeitssensoren angewiesen sind, sind diese jeweils an die bestehende Fahrzeuginfrastruktur anzupassen. Besonders nachteilig ist, daß bei Fahrzeugen, die noch keine Geschwindigkeitssensoren aufweisen, die Nachrüstung einer dynamischen Kurvenlichtfunktion äußerst aufwendig ist. Es ist die Aufgabe der Erfindung, eine Vorrichtung zur Steuerung von Kurvenlichtscheinwerfer in einem Kraftfahrzeug, zu schaffen, die von Signalen anderer Einrichtungen im Fahrzeug, insbesondere von Signalen eines Fahrzeuggeschwindigkeitssensors unabhängig ist.

Diese Aufgabe wird erfindungsgemäß dadurch gelöst, daß die Vorrichtung einen Gierratensensor und einen Querbeschleunigungssensor aufweist und aus den Ausgangssignalen dieser Sensoren den vom Fahrzeug durchfahrenen Kurvenradius berechnet.

Diese gesamte Vorrichtung kann vorteilhafterweise Bestandteil eines oder mehrerer Kraftfahrzeugscheinwerfer sein.

Die grundlegende Neuerung bei dem hier vorgestellten Konzept ist der Verzicht auf jegliche Fahrzeuginfrastruktur. Nach dem hier vorgestellten Konzept ist es beispielsweise möglich die notwendigen Sensoren, die Berechnungseinheit und die Steuerungseinheit in den Scheinwerfer zu integrieren. Die Sensor- und Berechnungseinheit kann auch an jedem anderen Ort des Fahrzeuges positioniert werden; dabei ist entscheidend, daß das System völlig selbstständig arbeitet.

Das System besteht aus einer Sensoreinheit, in welcher ein Querbeschleunigungssensor (Sensor, der Beschleunigungen in Richtung der Wirkungslinie der beim Durchfahren einer Kurve auftretender Zentrifugalkraft ermittelt) und ein Drehratensensor, also ein Sensor, der die Drehrate des Fahrzeugs bezüglich seiner Hochachse ermittelt, integriert ist, sowie aus einer Berechnungsund Steuerungseinheit.

Die Kombination eines Drehratensensors und eines Querbeschleunigungssensors ist die notwendige Neuerung um eine völlig autonome Ansteuerung für ein dynamisches Kurvenlicht zu realisieren. Ausgehend von den Gesetzen der kreisförmigen Bewegung kann aus der Drehrate des Fahrzeuges und der Querbeschleunigung des Fahrzeugs (also den Meßwerten der Sensoreinheit) der durchfahrene Kurvenradius und die aktuelle Geschwindigkeit berechnet werden. Da die Werte für die Drehrate und Querbeschleunigung des Fahrzeuges an jedem Ort des Fahrzeuges (annähernd) gleich sind können die Sensoren an jedem Ort des Fahrzeuges, inklusive dem Scheinwerfer selbst, positioniert werden.

Der ermittelte Kurvenradius kann dann in den entsprechenden Verstellwinkel für den entsprechenden Scheinwerfer (Kennlinie ist dabei auf den Scheinwerfer angepaßt) umgesetzt werden. Hierzu benötigt das Gesamtsystem eine analoge oder digitale, vorzugsweise mikroprozessorgesteuerte Berechnungseinheit. Die hier berechneten Verstellwinkel werden dann mit Hilfe der Verstelleinheit, die beispielsweise aus einem Gleichstrommotor mit Positionsrückmeldung oder aus einem Schrittmotor besteht, in die zugehörige Bewegung der Scheinwerfer umgesetzt.

In einer weiteren Auslegungsform wird die Sensoreinheit um einen Längsbeschleunigungssensor, also eines Sensors, der Beschleunigungen des Fahrzeugs parallel zu seiner Bewegungsrichtung ermittelt, erweitert. Mit Hilfe dieses Sensors kann in der Berechnungseinheit die Unkenntnis über die Fahrzeuggeschwindigkeit beim durchfahren von Geraden beseitigt werden. Das Signal des Längsbeschleunigungssensors dient dazu in der Berechnungseinheit in der Zeit zwischen zwei Kurven die Fahrzeuggeschwindigkeit zu berechnen. Somit kann auch ein Scheinwerfersystem, welches verschiedene Lichtverteilungen geschwindigkeitsabhängig steuert mit Hilfe eines völlig autonomen Sensorkonzeptes realisiert werden.

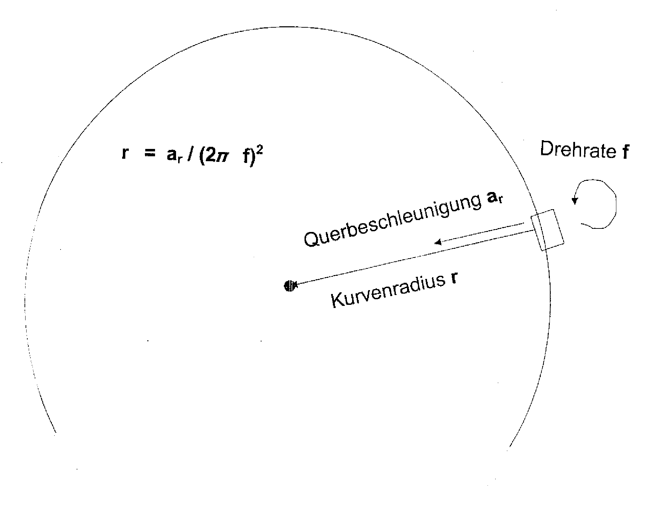

Im folgenden soll das Funktionsprinzip der Steuerungsvorrichtung anhand der einzigen Figur näher erläutert werden. In der Figur ist ein Fahrzeug skizziert, welches sich entlang einer kreisförmigen Kurve bewegt.

Der zur Steuerung der Kurvenlichtscheinwerfer zu bestimmende Kurvenradius sei mit r bezeichnet.

Die erfindungsgemäße Vorrichtung weist je einen Sensor für die Querbeschleunigung $a_r$ und für die Drehrate (genauer: Drehfrequenz) **f** auf. Die Drehrate des Fahrzeug entspricht dabei genau der Umlauffrequenz des Fahrzeugs auf dem Kreis; sie hängt daher mit der Kreisfrequenz $\omega$ über die Beziehung

$$\omega = 2\pi/T = 2\pi\, f$$

zusammen.

Die Querbeschleunigung $a_r$ ergibt sich zu

$$a_r = r\, \omega^2.$$

Hieraus berechnet sich der Kurvenradius **r** als Funktion von Querbeschleunigung $a_r$ und Drehrate **f** zu:

$$r = a_r/\omega^2 = a_r/(2\pi\, f)^2.$$

**Patentansprüche**

1. Vorrichtung zur Steuerung von wenigstens einem Kurvenlichtscheinwerfer in einem Kraftfahrzeug, **dadurch gekennzeichnet,** **daß** die Vorrichtung einen Gierratensensor und einen Querbeschleunigungssensor aufweist und aus den Ausgangssignalen dieser Sensoren den vom Fahrzeug durchfahrenen Kurvenradius berechnet.

2. Vorrichtung nach Anspruch 1, **dadurch gekennzeichnet, daß** die Vorrichtung zusätzlich einen Beschleunigungssensor aufweist.

3. Vorrichtung nach Anspruch 1, **dadurch gekennzeichnet, daß** die Vorrichtung ein Bestandteil eines Fahrzeugscheinwerfers ist.

$$r = a_r / (2\pi\ f)^2$$

Drehrate **f**

Querbeschleunigung $a_r$

Kurvenradius **r**